# EUROPÄISCHE PATENTANMELDUNG

(11) **EP 2 722 448 A1**
(43) Veröffentlichungstag der Anmeldung: **23.04.2014**
(21) Anmeldenummer: 13004908.3
(22) Anmeldetag: 12.10.2013
(51) Int. Cl.: E03B 3/12

(54) **Spielzeug**

(30) Priorität: 22.10.2012 DE 202012010041 U
(71) Anmelder: Krautschneider, Alexander, 67063 Ludwigshafen am Rhein (DE)
(72) Erfinder: Krautschneider, Alexander, 67063 Ludwigshafen (DE); Uecker, Rainer, 45470 Mülheim (DE)
(74) Vertreter: Busch, Tobias

(57) **Zusammenfassung**

Die Erfindung betrifft ein Spielzeug mit einem Körper (1), der zumindest eine Öffnung (4) zum Einsickern von Wasser (5) aus einem Untergrund (2) in einen Hohlraum (6) aufweist. Das Spielzeug weist eine Anordnung (7) zum Fördern des eingesickerten Wassers (5) zu einem Austritt (8) auf. Die Anordnung (7) zum Fördern des Wassers (5) umfasst ein Betätigungselement (11, 23). Erfindungsgemäß weist das Spielzeug einen Griff (9) zum Eindrehen und/oder Eindrücken des Körpers (1) in den Untergrund (2) auf.

## Beschreibung

Die Erfindung betrifft ein Spielzeug mit einem Körper, der zumindest eine Öffnung aufweist zum Einsickern von Wasser aus einem Untergrund in einen Hohlraum, wobei das Spielzeug eine Anordnung zum Fördern des eingesickerten Wassers zu einem Austritt aufweist und die Anordnung zum Fördern des Wasser ein Betätigungselement umfasst.

Es sind unzählige Arten an Spielzeugen bekannt, so dass diese je nach Einsatzgebiet kategorisiert werden. Die Erfindung betrifft ein Spielzeug für den Außenbereich, insbesondere zum Spielen im Sand.

Es ist beispielsweise ein Sandbohrerspielzeug bekannt, das einen zylindrischen Körper zum Eindrehen und/oder Eindrücken in den Sand umfasst. Die Kinder können den Sandbohrer in den Untergrund eindrehen und/oder eindrücken und auf diese Weise Löcher formen.

In der DE 38 37 818 A1 wird ein Wasserspielzeug beschrieben, das als Brunneneinsatz in Form eines wasserdurchlässigen, in den Untergrund eingrabbaren Behältnisses gestaltet ist. Das Wasserspielzeug kann mit einer handbetriebenen Kolbenpumpe oder einer batteriebetriebenen Pumpe ausgerüstet sein.

Das Eingraben in den Untergrund ist für Kinder müßig und macht ihnen häufig wenig Spaß.

Aufgabe der Erfindung ist es, ein Spielzeug zum Spielen im Sand anzugeben, das Kindern zusätzliche Spielmöglichkeiten eröffnet. Das Spielzeug soll für die Kinder einfach und völlig gefahrlos anzuwenden zu sein. Darüber hinaus soll sich das Spielzeug durch eine preiswerte, aber dennoch qualitativ hochwertige Herstellungsweise auszeichnen.

Diese Aufgabe wird erfindungsgemäß dadurch gelöst, dass das Spielzeug einen Griff zum Eindrehen und/oder Eindrücken des Körpers in den Untergrund aufweist, wobei der Griff drehfest mit dem Körper verbunden ist.

Durch den Griff ist kein eingraben des Spielzeugs erforderlich. Die Kinder können das Spielzeug ohne großen Kraftaufwand in den Untergrund eindrücken bzw. eindrehen. Mit dem Spielzeug ist es möglich, Wasser das im Untergrund vorhanden ist, beispielsweise in feuchtem Sand, in einen Hohlraum einsickern zu lassen. Dabei kann es sich um Süßwasser oder Salzwasser handeln.

Das Spielzeug eignet sich insbesondere zum Spielen am Strand. Der Körper wird am Ufer in Wassernähe in den Sand eingedreht und/oder eingedrückt, so dass er den Wasserspiegel erreicht. Beim Spielen am Strand in unmittelbarer Nähe zum Meer wird der Wasserspiegel bereits nach wenigen Dezimetern erreicht.

Der Körper weist zumindest eine Öffnung auf, die sich nach dem Eindrehen und/oder Eindrucken in den Untergrund, dann unterhalb des Wasserspiegels befindet. Durch die Öffnung kann Wasser in einen Hohlraum einsickern. Die Größe der Öffnung ist dabei so gewählt, dass sie so klein ist, dass möglichst wenig Sand in den Hohlraum eintreten kann, jedoch so groß, dass das Wasser aus dem Untergrund ausreichend schnell durch die Öffnung in den Hohlraum eintreten kann.

Erfindungsgemäß weist das Spielzeug einen Griff zum Drehen und/oder Drücken des Spielzeugs in den Untergrund auf. Der Griff ist an der Oberseite des Spielzeugs angebracht. Bei dem Griff kann es sich um ein getrenntes Bauteil handeln, das am Körper befestigt wird. Alternativ kann der Griff bei dem Fertigungsvorgang des Körpers mit ausgeformt werden, sodass Körper und Griff einstückig miteinander ausgebildet sind. Dabei wird eine Form eingesetzt, die beim Ausspritzen bzw. Ausgießen mit dem Kunststoff gleich den Griff mit ausformt.

Vorzugsweise ist der Griff als D-Griff ausgebildet. Dieser hat sich zum Einbohren des Körpers als besonders günstig erweisen. Dabei weist der Griff einen Greifbereich auf, der mit einer Hand umfasst wird. Der Greifbereich ist, zwischen zwei Flanken angeordnet. Die Flanken sind mit einem Anschlussbereich des Griffes verbunden. Vorzugsweise ist der Anschlussbereich hohlzylindrisch ausgebildet. Auch der obere Bereich des Körpers weist einen hohlzylindrisch ausgebildeten Bereich auf. Ist dessen Durchmesser kleiner als der Anschlussbereich des Griffes, so bildet der Anschlussbereich des Griffes eine Aufnahme in die der obere Bereich des Körpers eingefügt und festgelegt wird. Dazu können die beiden Teile miteinander verklebt, kunststoffverschweißt oder z.B. mit Nieten miteinander verbunden werden, so dass der Körper ist in der Aufnahme des Griffes drehfest befestigt ist.

Bei einer besonders vorteilhaften Ausführung der Erfindung weist das Spielzeug ein Filterelement auf. Dabei kann es sich um eine Schicht handeln, die hinter und/oder vor den Öffnungen angebracht ist. Die Öffnungen können alternativ oder ergänzend in das Filterelement integriert sein beispielsweise in Form von Poren, bzw. vom Filterelement selbst gebildet werden. Das Filterelement lässt Wasser in den Hohlraum einsickern und hält den Sand zurück.

Vorzugsweise besteht das Filterelement aus einem Vliesstoff. Der Vliesstoff ist vorzugsweise aus Kunststoff-Spinnfasern, insbesondere aus Polypropylen-Spinnfasern, hergestellt.

Bei einer besonders günstigen Ausführung der Erfindung weist das Spielzeug einen Einsatz zum Arretieren des Filterelements aufweist. Vorzugsweise ist dabei das Filterelement zwischen dem Körper und dem Einsatz angeordnet ist.

Bei einer vorteilhaften Variante der Erfindung ist der Einsatz als kegelförmiger Hohlkörper ausgebildet ist, der Öffnungen aufweist.

Alternativ hierzu kann man das Filterelement auch mit Komponenten fest vergossen oder verklebt werden.

Durch das Einsickern des Wassers bildet sich im Hohlraum ein Wasserreservoir. Das Spielzeug umfasst eine Anordnung, mit der die Kinder das Wasser aus diesem Reservoir zu einem Austritt fördern können.

Kinder können mit diesem Spielzeug Grundwasser fördern, weil in Ufernähe der Grundwasserspiegel sehr hoch liegt und beim Einbohren des Körpers in den Untergrund bereits nach einigen Dezimetern erreicht wird. Im Gegensatz zu herkömmlichen Spielgeräten, bei denen Kinder Wasser aus einem Vorratsgefäß mittels einer Pumpe fördern, wobei sie das Vorratsgefäß vorher selbst mit Wasser füllen müssen, erleben die Kinder bei diesem Spielzeug wie, auf scheinbar "magische" Weise, Wasser "aus dem Sand" gefördert wird. Dies ist ein besonders aufregendes Spielerlebnis. Das Spielzeug steckt im Sand und die Kinder können Wasser aus dem Untergrund zu einem Austritt hochpumpen.

Vorzugsweise wird der Hohlraum von dem Körper selbst gebildet. Als Hohlkörper eignet,sich insbesondere ein Hohlzylinder, der an seinem unteren Ende vorzugsweise eine Zuspitzung aufweist.

Die Öffnungen sind bei einer besonders vorteilhaften Variante der Erfindung entlang des Umfangs des Körpers angeordnet, sodass durch mehrere Öffnungen gleichzeitig Wasser in den Hohlraum einsickern kann. Auf diese Weise füllt sich der Hohlkörper schnell mit Wasser und die Kinder können schon nach kurzer Zeit mit dem Pumpen des Wassers beginnen. In unmittelbarer Ufernähe strömt das Wasser aus dem Untergrund meist so schnell nach, so dass ein kontinuierliches Pumpen von Wasser möglich ist.

Die Öffnungen können unterschiedliche Formen aufweisen, beispielsweise auch dreieckig oder viereckig. Vorzugsweise handelt es sich um runde Öffnungen. Die Größe der Öffnungen wird dabei so gewählt, dass möglichst wenig Sand eintreten kann, das Wasser aber dennoch mit ausreichender Geschwindigkeit in den Hohlkörper einströmen kann.

Es kann sich bei den Öffnungen auch um Poren handeln, beispielsweise eines Filterelementes. Alternativ oder ergänzend können die Öffnungen auch von Löchern im Mantel des Körpers gebildet werden, die auf diese Weise einen Filter bilden. Die Löcher sind klein genug, dass der den Sand zurückgehalten wird und dennoch das Wasser ausreichend schnell durch die Löcher in den Hohlraum einsickert. Dabei bildet der Körper, der in den Boden eingeschraubt und/oder eingedrückt wird, selbst den Filter durch die Löcher, die entlang seines Umfanges eingebracht sind und auch selbst das Wasserreservoir durch die Hohlkörpergestaltung.

Der Körper besteht vorzugsweise aus einem Kunststoff, wobei sich vor allem ein Polyolefin eignet, insbesondere Polypropylen. Der zylindrische Kunststoffkörper, der Öffnungen in Form von Löchern und/oder Poren aufweist, wird in den Boden eingeführt.

Bei einer besonders vorteilhaften Ausführung der Erfindung weist der Körper zumindest bereichsweise ein Außengewinde auf. Dieses Außengewinde kann entweder als separates Bauteil auf der Außenseite des Körpers angebracht werden. Als besonders günstig erweist es sich jedoch, wenn das Außengewinde einstückig mit dem Körper ausgebildet ist, sodass das Außengewinde bei der Herstellung des Körpers mit ausgeformt wird. Wird der Körper aus einem Kunststoff hergestellt, kann die Kunststoffform bereits so gestaltet werden, dass ein Außengewinde geformt wird.

Das Außengewinde ermöglicht ein Einschrauben des Körpers in den Untergrund. Durch Verdrehen des Körpers bohrt sich der Körper in den Sand.

Bei einer besonders vorteilhaften Ausführung der Erfindung ist der Austritt als Ausflussstutzen ausgebildet. Durch diese Ausgestaltung wird eine traditionelle

Handwasserpumpe simuliert. Die Kinder können beispielsweise einen Eimer unter den Ausflussstutzen stellen und diesen durch Pumpen mit Wasser füllen.

Bei einer günstigen Variante der Erfindung ist am Austritt ein Adapter zum Anschluss unterschiedlicher Elemente angeordnet. Dadurch kann unterschiedliches Zubehör montiert werden, wie zum Beispiel ein Standardhahn, eine Wasserspritze, eine Anschlussleitung zum Betrieb einer Wassermühle, eines Springbrunnens oder eines wasserbetriebenen Ventilators.

Erfindungsgemäß umfasst das Spielzeug eine Anordnung zum Fördern des eingesickerten Wassers, das sich im Hohlkörper sammelt. Dazu weist die Anordnung ein Betätigungselement auf.

Bei dem Betätigungselement kann es sich beispielsweise auch um einen Balg handeln. Durch Zusammendrücken des Balgs wird ein Unterdruck erzeugt werden und auf diese Weise das Wasser gefördert werden. Der Balg kann beispielsweise aus einem Gummi oder einem Kunststoff bestehen.

Bei einer besonders vorteilhaften Ausführung der Erfindung wird das Betätigungselement von einem Hebel gebildet. Der Hebel ist um einen Drehpunkt gelagert, so dass Schwenkbewegungen durchgeführt werden können. Dadurch wird ein Schwengel einer traditionellen Handpumpe simuliert. Dies bereitet den Kindern beim Spielen besondere Freude.

Bei einer Variante der Erfindung ist das Betätigungselement um einen Drehpunkt am Griff schwenkbar gelagert.

Bei einer alternativen Ausführung der Erfindung ist das Betätigungselement um eine Achse drehbar gelagert. Dabei kann es sich um eine Kurbel handeln die eine stangenartiges Element verdreht.

Bei einer günstigen Variante der Erfindung weist die Anordnung mindestens ein Membranpumpelement zur Förderung des Wassers auf. Dabei ist das zu fördernde Wasser vom Antrieb durch eine Membran getrennt. Durch eine hervorwölben der Membran wird Wasser angesaugt. Durch ein hineindrücken der Membran wird Wasser gepumpt.

Das Membranpumpelement wird vorzugsweise von einem stangenartigen Element angetrieben das Vorsprünge in Form von Auswölbungen aufweist. Das stangenartige Element ist drehbar gelagert und kann von einem kurbelartigen Betätigungselement verdreht werden. Dabei umfasst die Anordnung bei einer bevorzugten Ausführung der Erfindung eine Übersetzung.

Alternativ kann der Pumpvorgang auch mit einem Schwengel durchgeführt werden.

Bei einer Variante der Erfindung weist die Anordnung vorzugsweise ein Förderelement auf, das die Flüssigkeit verschiebt. Bei dem Förderelement kann es sich um eine Scheibe bzw. um einen Kolben handeln, der sich im Körper auf und ab bewegt. Zwischen dem Förderelement und dem Betätigungselement ist ein Verbindungselement angeordnet. Vorzugsweise handelt es sich dabei um eine Kolbenstange. Wird das als Hebel ausgeführte Betätigungselement nach unten geschwenkt, so verschiebt sich das als Stange ausgeführte Verbindungselement innerhalb des Körpers nach oben. Das Verbindungselement verschiebt das Förderelement in dem Hohlkörper nach oben. Das Förderelement seinerseits verschiebt das Wasser innerhalb des Hohlkörpers nach oben bis zum Austritt. Auf diese Weise wird das Wasser, welches sich in dem Innenraum des Körpers gesammelt hat, zum Austritt befördert.

Bei einer besonders vorteilhaften Ausführung der Erfindung umfasst die Anordnung zum Fördern ein Rückflussverhinderungselement. Es kann sich dabei um ein Rückschlagventil, eine Rückschlagklappe oder ein Manschette handeln. Vorzugsweise ist das Rückflussverhinderungselement in das Förderelement, beispielsweise einen Kolben, integriert.

Der Fördervorgang erfolgt in mehreren Arbeitsphasen. Während einer Phase wird der Raum über dem Förderelement mit Wasser gefüllt. In einer anschließenden Phase wird dann mittels des Förderelementes dieses Wasser innerhalb des Hohlkörpers nach oben zum Austritt verschoben.

Während der ersten Phase ist das Rückflussverhinderungselement geöffnet, so dass Wasser in dem Raum oberhalb des Förderelementes einströmen kann. Während dieser ersten Phase bewegt sich in der Regel das Förderelement im Hohlkörper nach unten, wobei das geöffnete Rückflussverhinderungselement das Einströmen von Wasser ermöglicht. Während der zweiten Phase bewegt sich das Förderelement in der Regel innerhalb des Hohlkörpers nach oben. Während dieser Phase ist nun das Rückflussverhinderungselement geschlossen, sodass das Förderelement das Wasser nach oben innerhalb des Hohlkörpers verschieben kann, ohne dass ein Rückfluss erfolgt.

Bei einer Variante der Erfindung weist das Spielzeug einen Zwischenraum zwischen dem Hohlraum, in den das Wasser einsickert, und der Anordnung auf. Beim Verschieben des Förderelements nach oben wird während einer Arbeitsphase Wasser aus dem Hohlraum in den Zwischenraum gefördert. Zwischen dem Hohlraum und dem Zwischenraum ist dabei ein weiteres Rückflussverhinderungselement angeordnet, das einen Rückfluss in den Hohlraum verhindert. Vorzugsweise handelt es sich dabei um eine Kugel. Dieses Rückflussverhinderungselement bildet ein Einlassventil für die Flüssigkeit im Zwischenraum.

Wird nun das Förderelement in einer folgenden Arbeitsphase nach unten verschoben, so öffnet sich das Rückflussverhinderungselement des Förderelements und Wasser strömt aus dem Zwischenraum in den Raum oberhalb des Förderelements. Das Rückflussverhinderungselement des Förderelements bildet ein Auslassventil für die Flüssigkeit im Zwischenraum.

Weitere Vorteile und Merkmale der Erfindung ergeben sich aus der Beschreibung eines Ausführungsbeispiels anhand von Zeichnungen und aus den Zeichnungen selbst. Dabei zeigt:
- Fig. 1: eine Schnittdarstellung eines Spielzeug ohne Zwischenraum,
- Fig. 2: eine perspektivische Darstellung eines Spielzeugs,
- Fig. 3: eine Schnittdarstellung eines Spielzeugs mit Zwischenraum,
- Fig. 4: eine Schnittdarstellung der Verwendung des Spielzeugs gemäß Fig. 3.,
- Fig. 5: eine Variante mit einer an der Oberseite angebrachten Kurbel,
- Fig. 6: eine Variante mit einer an der Seite angebrachten Kurbel,
- Fig. 7: eine Variante mit einem Adapter,
- Fig. 8a: einen Schnitt durch einen Körper mit einem Einsatz zur Arretierung eines Filterelements,
- Fig. 8b: eine Außenansicht der Variante gemäß Fig. 8a.

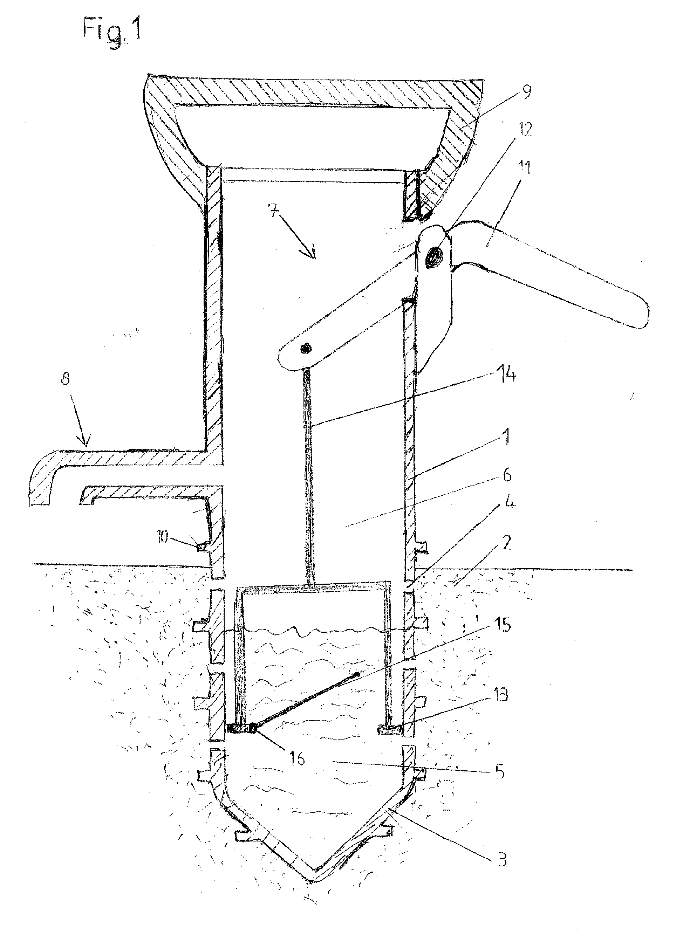

Fig. 1 zeigt eine Schnittdarstellung einer Variante des Spielzeugs. Das Spielzeug umfasst einen Körper 1 zum Eindrehen und/oder Eindrücken in einen Untergrund 2. Bei dem Körper 1 handelt es sich um einen zylindrischen Hohlkörper aus einem Kunststoff. Der Körper weist an seiner Unterseite eine Zuspitzung 3 auf. Bei der Zuspitzung 3 handelt es sich im Ausführungsbeispiel nicht um ein separates Bauteil, sondern um eine einstückig mit dem Körper 1 ausgeführte Ausformung. Die Zuspitzung 3 erleichtert das Eindrehen bzw. Eindrücken in den Untergrund 2.

Bei dem Untergrund 2 handelt es sich im Ausführungsbeispiel um Sand eines Strandes in unmittelbarer Nähe zum Meer.

Der Körper 1 weist Öffnungen 4 auf, zum Einströmen einer Flüssigkeit 5 in einen Hohlraum 6.

Die Öffnungen 4 sind in diesem Ausführungsbeispiel als kreisrunde Löcher entlang des Umfangs des Körpers 1 im unteren Bereich des Körpers 1 eingebracht. Die Größen der Öffnungen 4 sind dabei so gewählt, dass die Öffnungen 4 einen Filter bilden, der die Flüssigkeit 5 in den Hohlraum 6 einsickern lässt und den Sand zurückhält.

Der Hohlraum 6 wird im Ausführungsbeispiel von dem Körper 1 selbst gebildet. Die Flüssigkeit 5 sammelt sich im unteren Bereich des Körpers 1, der sich im Erdreich unterhalb des Grundwasserspiegels befindet. Mittels einer Anordnung 7 wird die Flüssigkeit 5 zu einem Austritt 8 gefördert.

Das Spielzeug weist einen Griff 9 auf zum Drehen und/oder Drücken des Körpers 1 in den Untergrund 2. Im Ausführungsbeispiel handelt es sich bei dem Griff 9 um ein separates Bauteil, das mit dem Körpers 1 verbunden ist.

Im unteren Bereich ist der Körper 1 mit einem Außengewinde 10 versehen. Das Außengewinde 10 erleichtert das Eindrehen des Körpers in den Untergrund 2. Die Kinder führen dabei am Griff 9 eine Drehbewegung durch. Der Griff 9 ist drehfest mit dem Körper 1 verbunden, sodass die Drehbewegung auf den Körper 1 übertragen wird. Dabei schraubt sich das Außengewinde 10 in den Untergrund 2.

Im Ausführungsbeispiel wird eine Anordnung 7 zum Fördern der Flüssigkeit 5 eingesetzt, die ein Betätigungselement 11 aufweist. Bei dem Betätigungselement 11 handelt es sich um einen Hebel, der um einen Drehpunkt 12 schwenkbar gelagert ist. Schwenkt man das Betätigungselement 11 nach oben, so wird ein Förderelement 13 in den Körper 1 nach unten verschoben. Bei dem Förderelement 13 handelt es sich um eine kreisrunde Scheibe. Gegebenenfalls kann das Förderelement 13 zu den Innenwänden des Körpers 1 mittels eines Dichtelementes abgedichtet sein. Zwischen dem Betätigungselement 11 und dem Förderelement 13 ist ein Verbindungselement 14 angeordnet. Bei dem Verbindungselement 14 handelt es sich um eine Stange. Wird das Betätigungselement 11 um den Drehpunkt 12 geschwenkt, so führt das Verbindungselement 14 eine Auf- bzw. Abwärtsbewegung innerhalb des Körpers 1 durch. Dadurch wird das Förderelement 13 nach oben bzw. unten verschoben.

Im Ausführungsbeispiel weist die Anordnung 7 ein Rückflussverhinderungselement 15 auf. Im Ausführungsbeispiel handelt es sich bei dem Rückflussverhinderungselement 15 um eine Rückschlagklappe, die in das Förderelement 13 integriert ist. Wird durch eine Schwenkbewegung des Betätigungselementes 11 nach oben, das Förderelement 13 innerhalb des Körpers 1 nach unten verschoben, so öffnet sich das Rückflussverhinderungselement 15. Die Klappe schwenkt um einen Drehpunkt 16 nach oben und lässt Flüssigkeit 5 in einen Raum oberhalb des Förderelements 13 innerhalb des Körpers 1 einströmen. Wird nun während einer zweiten Phase das Betätigungselement 11 nach unten geschwenkt, so bewegt sich das Förderelement 13 nach oben und das als Klappe ausgeführte Rückflussverhinderungselement 15 schließt sich. Dadurch wird die Flüssigkeit 5 im Raum oberhalb des Förderelementes 13 vom Förderelement 13 im Körper 1 nach oben verschoben und zum Austritt 8 gefördert.

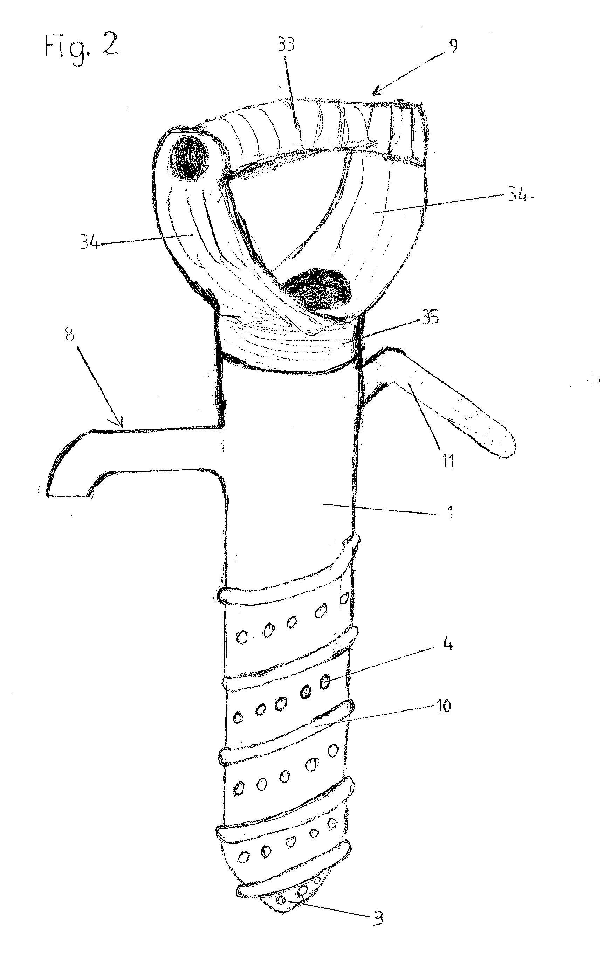

Fig. 2 zeigt eine perspektivische Ansicht eines Spielzeugs. Erfindungsgemäß ist der Griff als D-Griff ausgebildet. Er weist einen Greifbereich 33 zur Umfassung mit einer Hand auf. Der Greifbereich 33 ist zwischen zwei Flanken 34 angeordnet. Die Flanken 34 verbinden den Greifbereich 33 mit einem Anschlussbereich 35. Der Anschlussbereich 35 ist vorzugsweise hohlzylindrisch ausgebildet. Der Griff 9 ist einstückig aus einem Kunststoff ausgebildet.

Der Anschlussbereich 35 bildet eine Aufnahme für den oberen Teil des Körpers 1, der ebenfalls hohlzylindrisch ausgebildet ist, aber einen kleineren Durchmesser aufweist. Der Körper 1 ist in dieser Aufnahme des Griffs 9 drehfest befestigt.

Der Austritt 8 ist als Ausflussstutzen ausgeführt. Bei dem als Ausflussstutzen ausgebildeten Austritt 8 handelt es sich um ein zylindrisches Rohr, das am Körper 1 angeordnet ist und vorzugsweise zunächst in horizontaler Richtung verläuft, bevor es nach unten abknickt. Die Kinder können einen Eimer unterhalb des Ausflussstutzens positionieren, der dann durch Pumpbewegungen mit Wasser gefüllt wird. Im Ausführungsbeispiel ist der als Ausflussstutzen ausgeführte Austritt einstückig mit dem Körper 1 ausgeführt.

Beim Herstellungsprozess wird eine Form derart gestaltet, dass der als Ausflussstutzen ausgebildete Austritt 8 mit ausgeformt wird. Alternativ kann der Ausflussstutzen auch als separates Teil gefertigt sein, das am Körper 1 befestigt wird, beispielsweise mittels eines Schraubgewindes mit Dichtung oder einer Flanschverbindung.

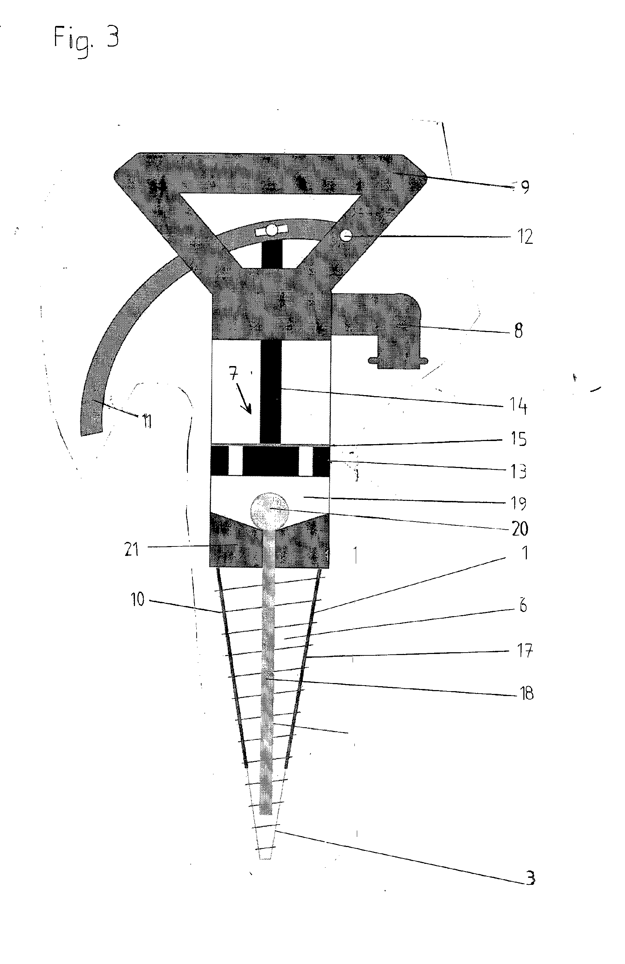

Fig. 3 zeigt eine Variante der Erfindung, bei der das Spielzeug ein Filterelement 17 und einen Zwischenraum 19 aufweist. Der Zwischenraum 19 befindet sich zwischen dem Hohlraum 6 und der Anordnung 7. Beim Verschieben des Förderelements 13 nach oben wird aus dem Hohlraum 6 Wasser 5 über eine Ansaugleitung 18 in den Zwischenraum 19 gefördert. Der Hohlraum 6 und der Zwischenraum 19 sind durch ein Übergangsstück 21 verbunden.

Zwischen dem Hohlraum 6 und dem Zwischenraum 19 ist ein weiteres Rückflussverhinderungselement 20 angeordnet. Diese verhindert einen Rückfluss in den Hohlraum 6. Vorzugsweise handelt es sich dabei in eine Kugel. Dieses Rückflussverhinderungselement 20 bildet ein Einlassventil für das Wasser in den Zwischenraum 19.

Wird nun das Förderelement 13 wieder nach unten verschoben, so öffnet sich das Rückflussverhinderungselement 15 des Förderelements 13 und Wasser 5 strömt aus dem Zwischenraum 19 in den Raum oberhalb des Förderelements 13. Das Rückflussverhinderungselement 15 bildet ein Auslassventil für das Wasser 5 aus dem Zwischenraum 19. Beim Ausführungsbeispiel gemäß Fig.3 handelt sich bei dem Rückflussverhinderungselement 15 um einen Ventilkegel mit Kolben-Manschette.

Die Öffnungen 4 sind bei der Variante gemäß Fig. 3 in einem perforierten Bereich des Körpers 1 integriert.

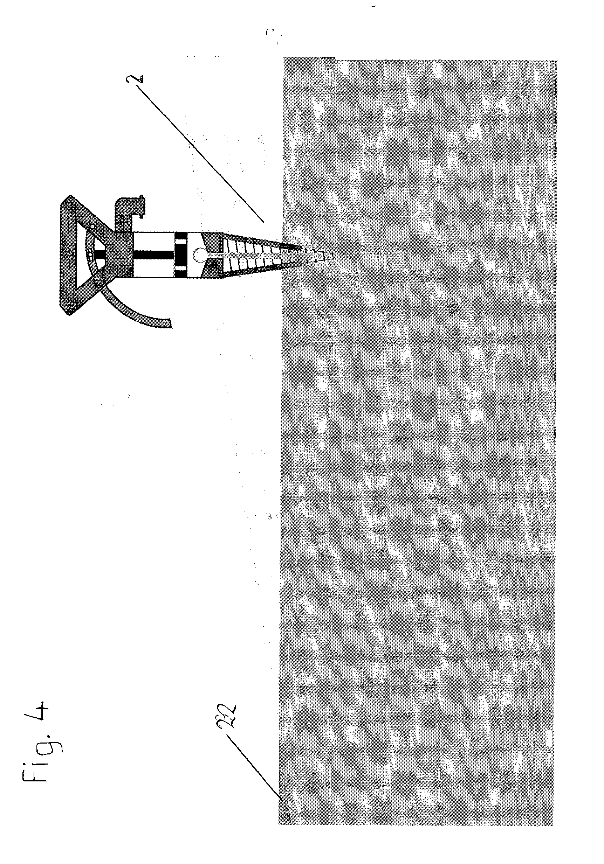

Fig. 4 zeigt eine Darstellung des Einsatzes eines Spielzeugs gemäß der Variante nach Fig. 3. Das Spielzeug wird am Strand nahe zum Meer 22 eingesetzt. Das Spielzeug wird in den Untergrund 2 eingedrückt und/oder eingedreht und erreicht mit seiner Spitze den Grundwasserpegel, so dass Wasser 5 in den Hohlraum 6 einsickert.

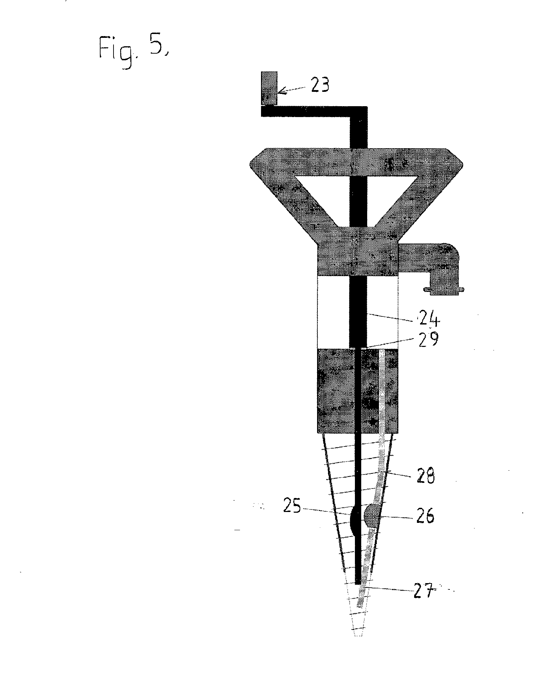

Fig. 5 zeigt eine Variante bei der ein Betätigungselement 23 in Form einer Kurbel an der Oberseite angebracht ist. Die Kurbel umfasst einen Kurbelgriff, der vorzugsweise eine Hülse aufweist. Die Kurbel steht mit einem stangenartigen Verbindungselement 24 in Verbindung, das vertikal, vorzugsweise mittig, in dem Körper 1 verläuft und von der Kurbel verdreht wird.

Das stangenartige Verbindungselement 24 weist Vorsprünge 25 auf, die im Ausführungsbeispiel als Verdickungen bzw. hervorragende Wulste ausgebildet sind.

Bei der Variante gemäß Fig. 5 wird das Wasser 5 mittels eines Membranpumpelements 26 gefördert, die werden beim Verdrehen des stangenartigen Verbindungselements 24 durch die Vorsprünge 25 angeregt. Das Membranpumpelement 26 ist mit einer Zuführleitung 27 und einer Abführleitung 28 verbunden. Diese sind im Ausführungsbeispiels als Schläuche ausgebildet.

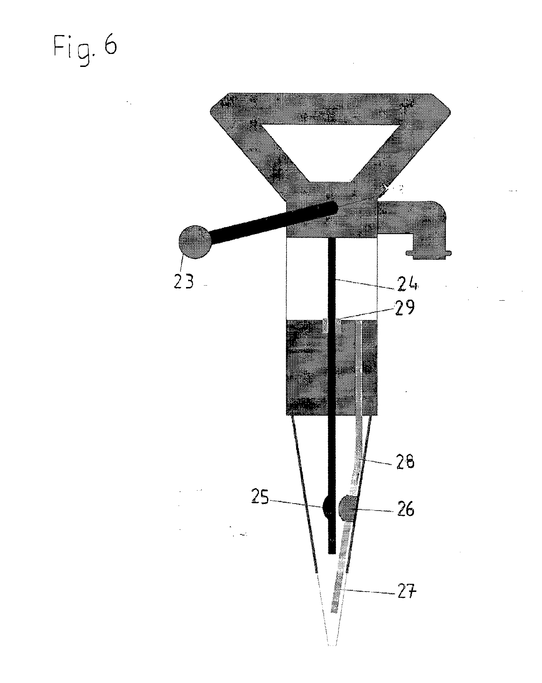

Bei der Variante gemäß Fig. 6 ist ein Betätigungselement 23 in Form einer Kurbel seitlich angebracht. In Ausführungsbeispiel ist die Kurbel am Griff 9 befestigt. Das stangenartige Verbindungselement 24 weist an seiner Oberseite ein Kegelrad auf. Die Kurbel weist Ritzel zum Antrieb des Kegelrades auf. Das stangenartige Verbindungselement 24 ist an einem Übergang zwischen zwei Räumen mit einer Dichtung 29 versehen.

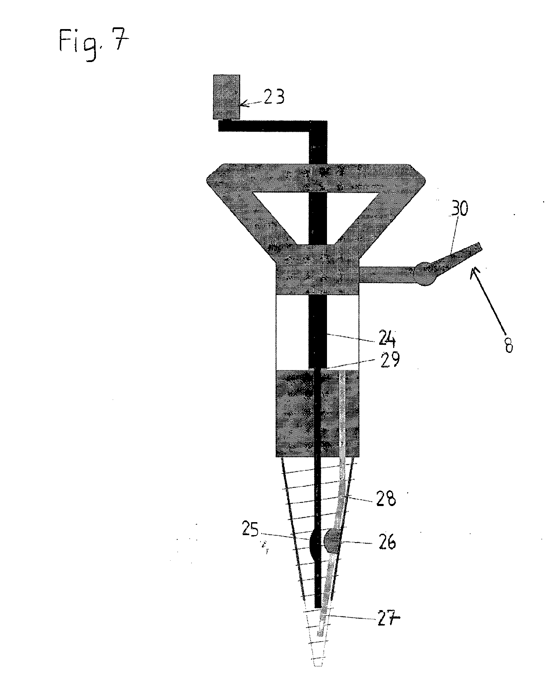

Fig. 7 zeigt eine Variante bei der der Austritt 8 als Adapter 30 ausgeführt ist. Dadurch kann unterschiedliches Zubehör montiert werden, wie zum Beispiel ein Standardhahn, eine Wasserspritze, eine Anschlussleitung zum Betrieb einer Wassermühle, eines Springbrunnens oder eines wasserbetriebenen Ventilators.

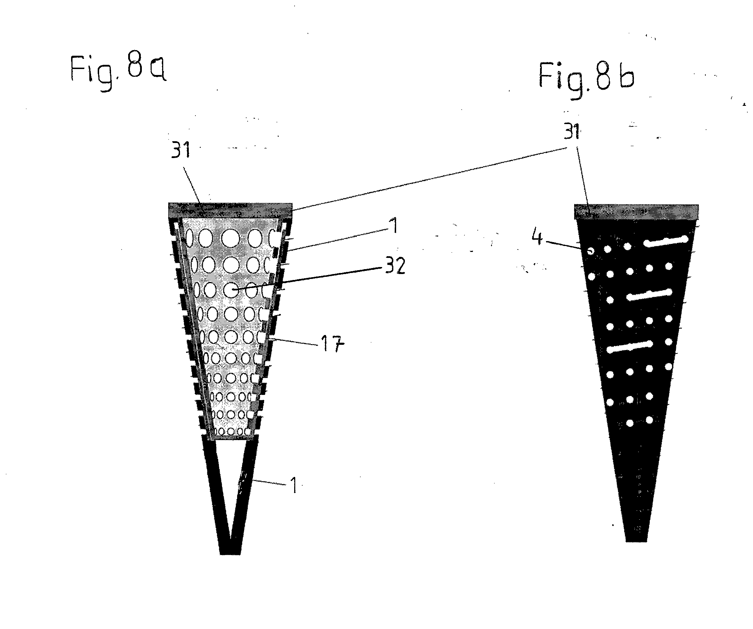

Fig. 8a und Fig. 8b zeigen einen Einsatz 31 zur Arretierung eines Filterelements 17. Im Ausführungsbeispiel wird als Filterelement 17 ein Vliesstoff aus Polypropylen-Spinnfasern eingesetzt.

Das Filterelement 17 ist zwischen dem Körper 1 und dem Einsatz 31 angeordnet ist. Bei dieser Variante kann das Filterelement 17 gereinigt oder ausgetauscht werden. Im Ausführungsbeispiel ist der Einsatz 31 als kegelstumpfförmiger Hohlkörper ausgebildet ist, der Öffnungen 32 aufweist.

## Patentansprüche

1. Spielzeug mit einem Körper (1), der zumindest eine Öffnung (4) aufweist zum Einsickern von Wasser (5) aus einem Untergrund (2) in einen Hohlraum (6), wobei das Spielzeug eine Anordnung (7) zum Fördern des eingesickerten Wassers (5) zu einem Austritt (8) aufweist und die Anordnung (7) zum Fördern des Wasser (5) ein Betätigungselement (11, 23) umfasst,
**dadurch gekennzeichnet, dass**
das Spielzeug einen Griff (9) zum Eindrehen und/oder Eindrücken des Körpers (1) in den Untergrund (2) aufweist, wobei der Griff (9) drehfest mit dem Körper (1) verbunden ist.

2. Spielzeug nach Anspruch 1, **dadurch gekennzeichnet, dass** der Griff (9) als D-Griff ausgebildet ist, der einen Greifbereich (33) zur Umfassung mit einer Hand aufweist, wobei der Greifbereich (33) zwischen zwei Flanken (34) angeordnet ist und die Flanken (34) den Greifbereich (33) mit einem Anschlussbereich (35) verbinden.

3. Spielzeug nach Anspruch 1 oder 2, **dadurch gekennzeichnet, dass** der Griff (9) eine Aufnahme für einen oberen Teil des Körpers (1) aufweist.

4. Spielzeug nach einem der Ansprüche 1 bis 3,
**dadurch gekennzeichnet, dass** der Körper (1) zumindest bereichsweise ein Außengewinde (10) aufweist.

5. Spielzeug nach einem der Ansprüche 1 bis 4,
**dadurch gekennzeichnet, dass** das Spielzeug ein Filterelement (17) aufweist.

6. Spielzeug nach Anspruch 5, **dadurch gekennzeichnet, dass** das Filterelement (17) aus einem Vliesstoff besteht, wobei der Vliesstoff vorzugsweise aus Kunststoff-Spinnfasern, insbesondere aus Polypropylen-Spinnfasern, hergestellt ist.

7. Spielzeug nach Anspruch 5 oder 6, **dadurch gekennzeichnet, dass** das Spielzeug einen Einsatz (31) zum Arretieren des Filterelements (17) aufweist, wobei das Filterelement (17) zwischen dem Körper (1) und dem Einsatz (31) angeordnet ist.

8. Spielzeug nach Anspruch 7, **dadurch gekennzeichnet, dass** der Einsatz (31) als Hohlkörper ausgebildet ist, der Öffnungen (32) aufweist.

9. Spielzeug nach einem der Ansprüche 1 bis 8,
**dadurch gekennzeichnet, dass** das Betätigungselement (11) um einen Drehpunkt (12) schwenkbar gelagert ist.

10. Spielzeug nach einem der Ansprüche 1 bis 8, **dadurch gekennzeichnet, dass** das Betätigungselement (23) um eine Achse drehbar gelagert ist.

11. Spielzeug nach einem der Ansprüche 1 bis 10, **dadurch gekennzeichnet, dass** die Anordnung (7) mindestens ein Membranpumpelement (26) zur Förderung des Wassers (5) aufweist.

12. Spielzeug nach einem der Ansprüche 1 bis 10,
**dadurch gekennzeichnet, dass** die Anordnung (7) ein Förderelement (13) zum Verschieben des Wassers (5) aufweist, wobei zwischen dem Förderelement (13) und dem Betätigungselement (11) ein Verbindungselement (14) angeordnet ist.

13. Spielzeug nach einem der Ansprüche 1 bis 12,
**dadurch gekennzeichnet, dass** die Anordnung (7) ein Rückflussverhinderungselement (15) aufweist.

14. Spielzeug nach einem der Ansprüche 1 bis 13,
**dadurch gekennzeichnet, dass** das Spielzeug einen Zwischenraum (19) zwischen dem Hohlraum (6) und der Anordnung (7) aufweist, wobei vorzugsweise zwischen dem Hohlraum (6) und dem Zwischenraum (19) ein Rückflussverhinderungselement (20) angeordnet ist.

15. Spielzeug nach einem der Ansprüche 1 bis 14, **dadurch gekennzeichnet, dass** der Austritt (8) als Adapter (30) zum Anschluss unterschiedlicher Elemente ausgeführt ist.
